# EUROPEAN PATENT SPECIFICATION

(11) **EP 1 737 255 B1**
(45) Date of publication and mention of the grant of the patent: **14.10.2009**
(21) Application number: 05757313.1
(22) Date of filing: 08.06.2005
(51) Int. Cl.: H04W 60/04

(54) **Method and apparatuses for a routing area update of a serving GPRS support node**
Verfahren und Vorrichtungen zur Routing Area Aktualisierung eines Serving GPRS Support Nodes
Procédé et dispositifs de mise à jour de zone de routage d'un noeud de support GPRS de service

(30) Priority: 08.06.2004 CN 200410048649
(43) Date of publication of application: 27.12.2006
(73) Proprietor: Huawei Technologies Co., Ltd., Longgang District Shenzhen Guangdong 518129 (CN)
(72) Inventor: HU, Weihua, Shenzhen, Guangdong 518129 (CN)
(74) Representative: Pfenning, Meinig & Partner GbR
(86) International application number: PCT/CN2005/000807
(87) International publication number: WO 2005/122603

(56) References cited:
- EP-A1- 1 335 619
- WO-A-00/28771
- WO-A-01/15479
- WO-A2-01/91370
- WO-A2-98/32304
- CN-A- 1 267 433
- CN-A- 1 281 625
- ETSI: "Digital cellular telecommunications system (Phase 2+); Universal Mobile Telecommunications System (UMTS); General Packet Radio Service (GPRS); Service description; Stage 2 (3GPP TS 23.060 version 3.16.0 Release 1999)" ETSI TS 123 060 V3.16.0 (2003-12), 31 December 2003 (2003-12-31), page 1-110, XP002415972 France

## Description

### Field of the Invention

The present invention relates to communication field, particularly to a technique of updating routing area in a Serving GPRS Support Node (SGSN) and switching between systems in General Packet Radio Service (GPRS) and Wideband Code Division Multiple Access (WCDMA) mobile communication systems.

### Background of the Invention

In a mobile communication system, each network operated by the operator has a unique Public Lands Mobile Network (PLMN) ID, which uniquely identifies each operation network. The PLMN ID includes a Mobile Country Code (MCC) and a Mobile Network Code (MNC), for example, MCC of the China Mobile is 460 and MNC thereof is 00; MNC of the China Unicom is 01.

Usually, an SGSN belongs to one operating network and is managed by one operator, and has only one PLMN ID (also referred to as HPLMN ID, i.e., SGSN's home PLMN ID).

As mobile telecommunication services grow rapidly, the operation models of operators have changed greatly, and the operators' demands are diversified. For example, to provide third-generation mobile telecommunication services, the operators have to upgrade their networks; however, the upgrade process is gradual and requires a quite long construction period. To avoid adverse effects to the existing services, the operators hope to overlay a Universal Mobile Telecommunications System (UMTS) network on the existing Global System for Mobile Communication (GSM) network and require the UMTS network to use an HPLMN ID different from the HPLMN ID of the GSM network, to meet the demand of operation.

Another case is: as the merging and cooperation between operators become more and more frequent, the operator, after acquiring a radio access network from another operator, expects the acquired network can operate seamlessly with their own networks without modifying the HPLMN ID of the acquired network, in view of operating efficiency and convenience.

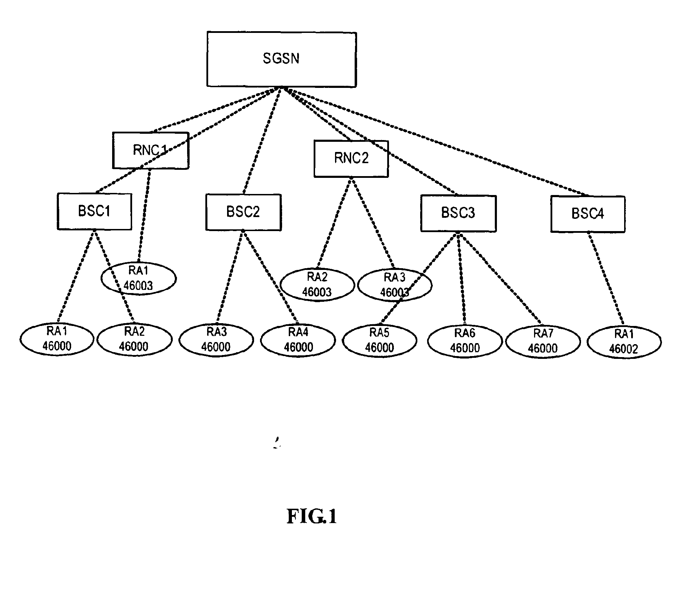

Specifically, as shown in FIG. 1, the original PLMN of operator A had a PLMN ID of 46000, and the SGSN and its managed Base Station Controller (BSC) 1, BSC 2 and BSC 3 belonged to the PLMN. Later, the operator A acquired a PLMN (PLMN ID = 46002) from operator B; for the sake of convenience, the operator A didn't change the PLMN ID of the acquired PLMN but still used the original PLMN ID (46002). As a result, BSC 4 was included in the SGSN's management domain. To upgrade the network incrementally, the operator A constructed a third-generation mobile communication network 46003 on the basis of the existing networks and upgraded the SGSN to support the second-generation and third-generation access networks. In this way, Radio Network Controller (RNC) and RNC 2 were also included in the SGSN's management domain. Finally, the SGSN manages three access networks with different PLMN IDs.

In short, for above demand, SGSN must be compatible to the case in which the access network possesses multiple PLMN IDs. In other words, if the routing areas covered by BSCs or RNCs under the SGSN possess different PLMN IDs, the SGSN shall operate normally from the viewpoint of legal mobile subscribers that access to the access networks with different PLMN IDs, it is equivalent that the SGSN has multiple HPLMN IDs.

When the routing area serving the mobile subscriber changes, or the subscriber requires updating some parameters (e.g., mobile telephone capability parameters, radio access capability parameters, and network capability parameters, etc.) stored in the core network, a routing area update process will be initiated.

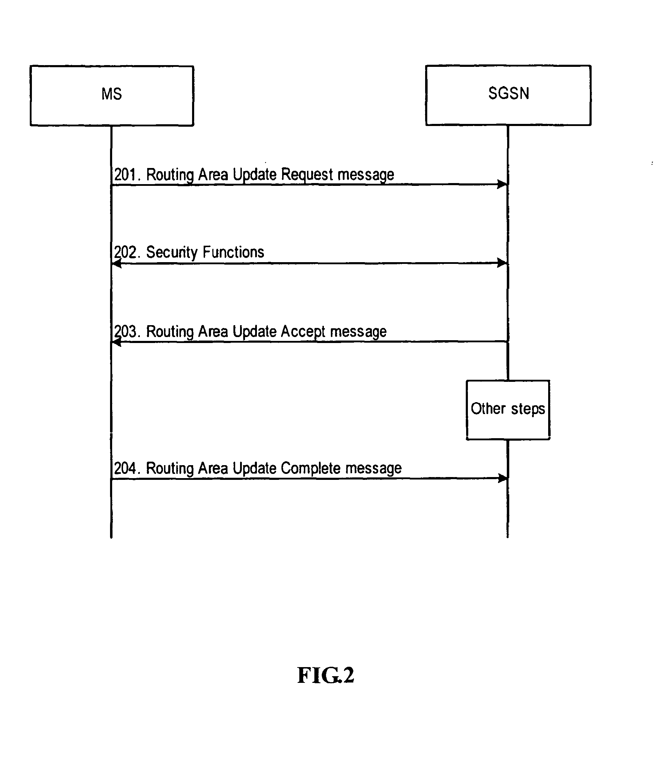

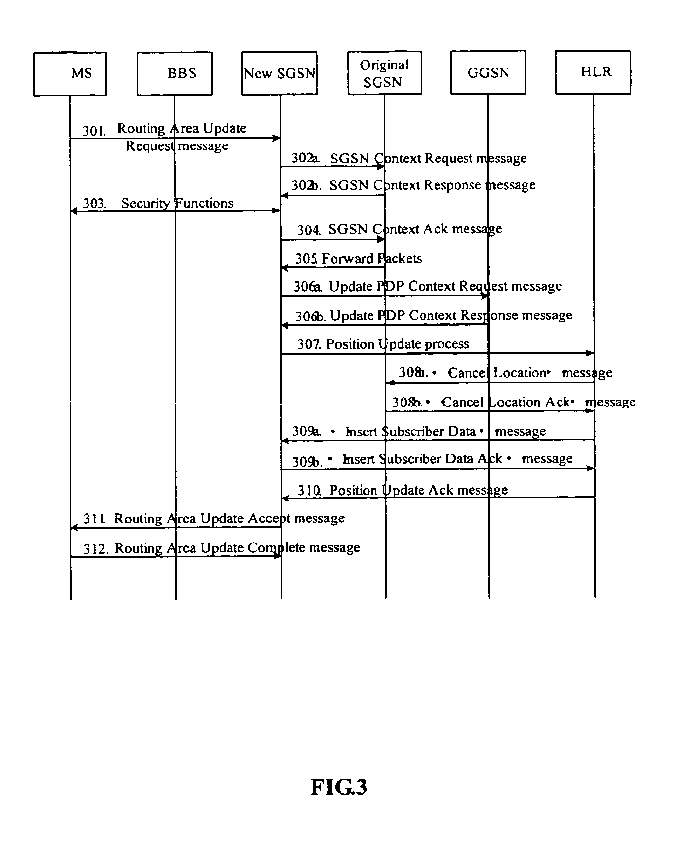

After the subscriber initiates the routing area update, if the new routing area serving the subscriber is still a routing area managed by the same SGSN, it means the routing area update process only happens in one SGSN; in this case, the routing area update is referred to as internal routing area update in an SGSN. Contrarily, after the subscriber initiates the routing area update, if the new routing area serving the subscriber is a routing area managed by a different SGSN, the routing area update process involves two SGSNs; in this case, the routing area update is referred to as routing area update across SGSNs. Hereinafter the internal routing area update process in an SGSN and the routing area update process across SGSNs in a GPRS system are described, with reference to FIG.2 and FIG.3.

First, please see FIG.2. In the internal routing area update process in an SGSN, in step 201, a Mobile Station (MS) sends a Routing Area Update Request message to the SGSN; the Routing Area Update Request message contains information elements, such as information of the previous routing area and the current routing area, temporary ID of the subscriber, and type of the routing area update, etc.; then, in step 202, the SGSN performs Security Functions in accordance with the configuration of operator; next, in step 203, the SGSN issues a Routing Area Update Accept message to the MS, to notify the MS that the routing area update has been accepted by the core network; finally, in step 204, if the core network assigns a temporary ID to the subscriber in the Routing Area Update Accept message, the MS must respond with a Routing Area Update Complete message, to indicate the Routing Area Update Accept message has been received and the MS has accepted the new temporary ID.

FIG.3 shows a process of routing area update across SGSNs. First, in step 301, the MS sends a Routing Area Update Request message to the new SGSN, to notify the new SGSN to initiate a routing area update process. The message contains information elements, such as information of the previous routing area and the current routing area, temporary ID of the subscriber, and type of the routing area update, etc.

Next, in step 302a and 302b, the new SGSN sends a SGSN Context Request message to the original SGSN, to request the original SGSN to provide the subscriber's context information stored in the original SGSN; the original SGSN transfers the subscriber's context information to the new SGSN with a SGSN Context Response message.

Next, in step 303, the new SGSN performs Security Functions on the subscriber in accordance with the configuration of operator.

Next, in step 304, the new SGSN sends a SGSN Context Ack message to the original SGSN, so that the original SGSN begins to forward the buffered packets to the new SGSN.

Next, in step 305, the original SGSN forwards the buffered packets to the new SGSN (with a Forward Packets message).

Next, in step 306a and 306b, the new SGSN sends an Update PDP Context Request (PDP, Packet Data Protocol) message to the Gateway GPRS Support Node (GGSN), to update the GGSN; after completing the update, the GGSN feeds a response message back to the new SGSN, and the original SGSN feeds a response message back to the Base Station Subsystem (BSS).

Next, in step 307, the new SGSN initiates an Update Location process to the Home Location Register (HLR).

Next, in step 308a and 308b, the HLR informs the original SGSN to delete the subscriber's contract data (with a Cancel Location message and a Cancel Location Ack message). Next, in step 309a and 309b, the HLR inserts the mobile subscriber's contract data in the new SGSN (with an Insert Subscriber Data and an Insert Subscriber Data Ack message).

Next, in step 310, the HLR issues a Position Update Ack message. Next, in step 311, the new SGSN sends a Routing Area Update Accept message to the MS; if the core network re-assigned a temporary ID to the subscriber in the Routing Area Update Accept message, the MS must respond with a Routing Area Update Complete message in step 312, to indicate the Routing Area Update Accept message from the core network has been received and the re-assigned temporary ID has been accepted.

In comparison between the internal routing area update process in an SGSN and the routing area update process across SGSNs, it can be seen that if the routing area update happens in an SGSN, it is unnecessary to insert the subscriber's contract data in the HLR, and the SGSN needn't to send an Update PDP Context Request message to update the GGSN. On the contrary, if the routing area update happens between SGSNs, the SGSN has to update the GGSN with an Update PDP Context Request message.

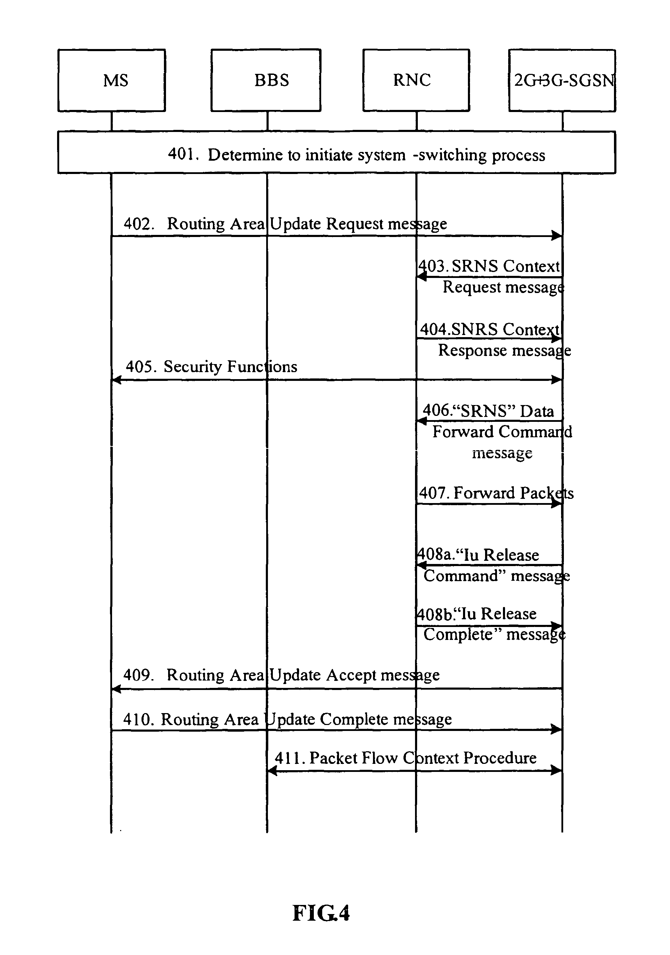

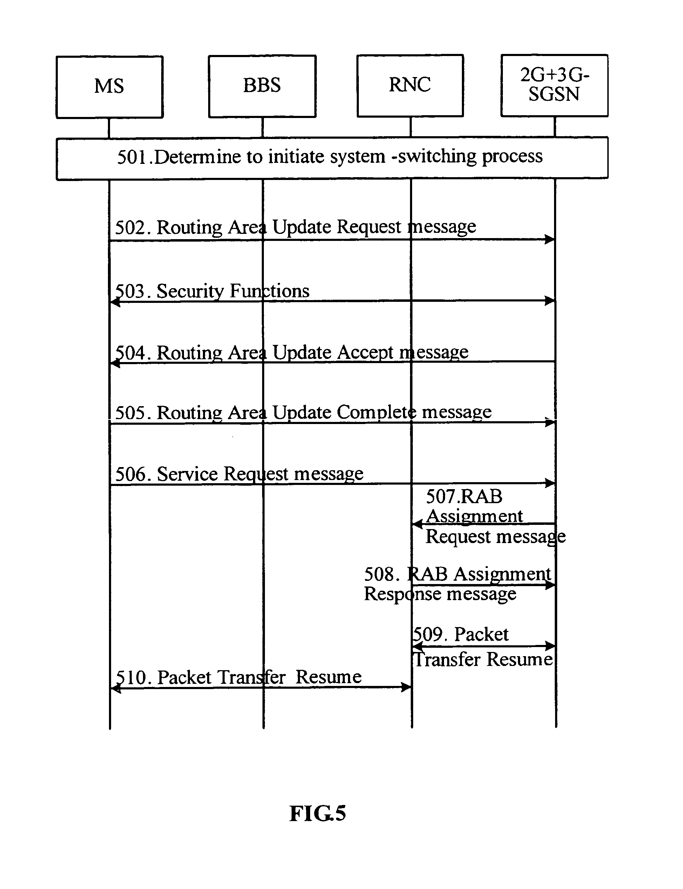

Similar to the routing area update, when a mobile subscriber switches from a 2G access network to a 3G access network, or a mobile subscriber switches from a 3G access network to a 2G access network, the mobile subscriber has to initiate a system switching process. If the new routing area serving the subscriber is still in the management domain of the same SGSN after the subscriber initiates the system switching process, the system switching is referred to as an internal system switching in an SGSN. On the contrary, if the new routing area serving the subscriber is in the management domain of a different SGSN after the subscriber initiates the system switching process, the system switching is referred to as a system switching across SGSNs. FIG.4 and FIG.5 show the internal system switching processes in an SGSN.

FIG. 4 shows the internal system switching process from UMTS to GSM in an SGSN. As shown in the figure, first, in step 401, the subscriber decides to initiate a system switching process.

Next, in step 402, the MS sends a Routing Area Update Request message to the SGSN; the message contains information elements, such as information of the previous routing area and the current routing area, temporary ID of the subscriber, and type of the routing area update, to notify the SGSN to initiate a system switching process.

Next, in step 403, the SGSN sends an SRNS Context Request (SRNS, Serving Radio Network Subsystem) message to the RNC, to notify the RNC to stop data forwarding and obtain the subscriber's data package's sequence number. It is noted that the RNC here is an RNC in SRNS. Next, in step 404, the RNC returns an SRNS Context Response message.

Next, in step 405, the SGSN performs Security Functions on the subscriber in accordance with the configuration of operator.

Next, in step 406, the SGSN notifies the RNC to forward the buffered packets to the SGSN (with a SRNS Data Forward Command message).

Next, in step 407, the RNC begins to forward the buffered packets (with a Forward Packets message).

Next, in step 408a and 408b, the SGSN notifies the RNC to release the Iu connection (with an Iu Release Command message and an Iu Release Complete message).

Next, in step 409, the SGSN issues a Routing Area Update Accept message to the MS, to notify the routing area update has been accepted by the core network.

Next, in step 410, if the core network re-assigned a temporary ID to the subscriber in the Routing Area Update Accept message, the mobile subscriber must responds with a Routing Area Update Complete message, to indicate the Routing Area Update Accept message from the core network has been received and the re-assigned temporary ID has been accepted.

Finally, in step 411, the BSS and SGSN execute a BSS Packet Flow Context Procedure.

FIG.5 shows the system switching process from GSM to UMTS in an SGSN. First, in step 501, the subscriber decides to initiate a system switching process. Next, in step 502, the MS sends a Routing Area Update Request message; the message contains information elements, such as information of the previous routing area and the current routing area, temporary ID of the subscriber, and type of the routing area update, to notify the SGSN to initiate a system switching process.

Next, in step 503, the SGSN performs Security Functions on the subscriber in accordance with the configuration of operator.

Next, in step 504, the SGSN issues a Routing Area Update Accept message, to notify the mobile station that the routing area update has been accepted by the core network.

Next, in step 505, if the core network re-assigned a temporary ID to the subscriber in the Routing Area Update Accept message, the mobile subscriber must respond with a Routing Area Update Complete message, to indicate the Routing Area Update Accept message from the core network has been received and the re-assigned temporary ID has been accepted.

Next, in step 506, the MS sends a Service Request message to the SGSN, to request to reconstruct the resource required for resuming packet transfer.

Next, in step 507, the SGSN issues a RAB Assignment Request (RAB, Radio Access Bearer) message to instruct the RNC to allocate resource.

Next, in step 508, the RNC sends a RAB Assignment Response message to the SGSN to allocate radio resource, and returns the result.

Next, in step 509, the packet transfer between the SGSN and the access network is resumed (with a Packet Transfer Resume message).

Finally, in step 510, the packet transfer between the MS and the RNC is resumed.

Through analysis of FIG. 4 and FIG. 5, it can be seen that the system switching process is slightly different from the routing area update process but is very similar, especially, the same signaling messages are used. In addition, identical with the routing area update process, the entire system switching process doesn't involve a GGSN update process if the system switching process is an internal process in an SGSN. Only the system switching process across SGSNs involves a GGSN update process.

In conclusion, according to the existing protocol specifications, neither the routing area update process nor the system switching process involves a GGSN update process as long as the process is an internal process in an SGSN.

As specified in the protocol specifications issued after December 2002, an information element carrying the PLMN ID of the current access network serving the mobile subscriber is added in the notification messages from SGSN to GGSN, such as the Create PDP Context Request message and the Update PDP Context Request message. The GGSN can restrict and filter downlink data packets in accordance with the PLMN serving the subscriber; in addition, a PLMN field is added in the charging data recorder of GGSN. That means, if the PLMN ID of the access network serving the subscriber changes, the SGSN shall notify the GGSN timely.

After a routing area update or system switching process for the mobile subscriber, if the PLMN of the routing area changes and the SGSN changes, there is no trouble regarding above demand, because the SGSN will initiates a GGSN update process in the routing area update process as specified in the protocol specifications, so that the GGSN can know the current access network serving the mobile subscriber timely.

However, if the PLMN of the routing area serving the mobile subscriber changes but the SGSN does not change after the routing area update or system switching process for the mobile subscriber, it is impossible for the GGSN to know the PLMN of the access network serving the subscriber has changed, in accordance with the processing flow specified in the protocol specifications. In fact, the specifications only takes into account general situations, i.e., it is assumed that the SGSN has only one HPLMN. However, in the foresaid multiple HPLMN case, the SGSN has to manage multiple access networks with different PLMN IDs. Therefore, it is possible that the PLMN ID of the access network changes after a routing area update or system switching process in an SGSN. If the original protocol process is followed, the PLMN information of the subscriber stored in GGSN will not be updated in time, causing adverse effects to relevant services.

### Summary of the Invention

Aspects of the invention provide a routing area update method in a Servicing General Packet Radio Service Support Node (SGSN), to ensure that the GGSN can be notified timely when access network serving the subscriber changes, and thereby ensure normal operation of GGSN-related services and correctness of GGSN charging data recorder. The method is performed according to the independent claims.
Document WO 01/91370 A2 discloses a system and method for providing a connection in a communication network which comprises several network elements and is adapted to route a connection via a first network element such as a radio network controller and one or more of alternatively selectable second network elements such as serving nodes.
Document WO 01/15479 A1 discloses a packet switched network architecture having a first location area associated with a first core network and a second location area associated with a second core network, wherein at least a portion of the first and second location areas overlap thereby forming a common location area, the common location area being associated with a location area identifier common to both the first and second core networks, the location area identifier additionally including a core network identifier field having a value to distinguish between the first and second core networks.

In comparison, it can be seen that the difference between the technical solution of the present invention and the prior art lies in: when the mobile station enters from the first routing area into the second routing area managed by the same serving general packet radio service support node, the serving general packet radio service support node issues a Routing Area Update Accept message to the mobile station, and then checks whether the PLMN IDs of the first and second routing areas are the identical with each other; if they are different, the PDP context in the corresponding gateway general packet radio service support node will be updated.

Such a difference in technical solution brings a significant advantageous benefit, i.e., the GGSN can know the access network serving the subscriber has changed timely, thereby normal operation of GGSN-related services and correctness of GGSN charging data recorder can be ensured.

### Brief Description of the Drawings

FIG. 1 is a structural diagram of an SGSN that supports multiple HPLMNs in the prior art;

FIG. 2 is a flow diagram of routing area update in an SGSN in the prior art;

FIG. 3 is a flow diagram of routing area update across SGSNs in the prior art;

FIG. 4 is a flow diagram of system switching from UMTS to GSM in an SGSN in prior art;

FIGS is a flow diagram of system switching from GSM to UMTS in an SGSN in prior art;

FIG. 6 is a flow diagram of routing area update in an SGSN according to an embodiment of the present invention;

FIG. 7 is a flow diagram of system switching from UMTS to GSM in an SGSN according to an embodiment of the present invention; and

FIG.8 is a flow diagram of system switching from GSM to UMTS in an SGSN according to an embodiment of the present invention.

### Detailed Description of the Embodiments

To make the object, technical solution, and advantages of the present invention more clear, hereinafter preferred embodiments of the present invention will be described in further detail with reference to the accompanying drawings.

In general, according to an embodiment of the present invention, in the routing area update process and the system switching process in an SGSN, after an SGSN issues a Routing Area Update Accept message, an PLMN ID of the access network serving the mobile subscriber is checked to determine whether it changes:

1) If the PLMN ID changes, it indicates the routing area update or system switching is an update and switching across PLMNs in an SGSN; in this case, the SGSN sends an Update PDP Context Request message carrying information of the new PLMN to a GGSN, and waits for a response from the GGSN. After the SGSN receives a response that indicates success, the SGSN continues the routing area update or system switching process. If the GGSN provides no response or provides a response that indicates failure, the SGSN releases the corresponding PDP context.

2) If the PLMN ID does not change, the SGSN continues the routing area update and system switching process and will not update the GGSN.

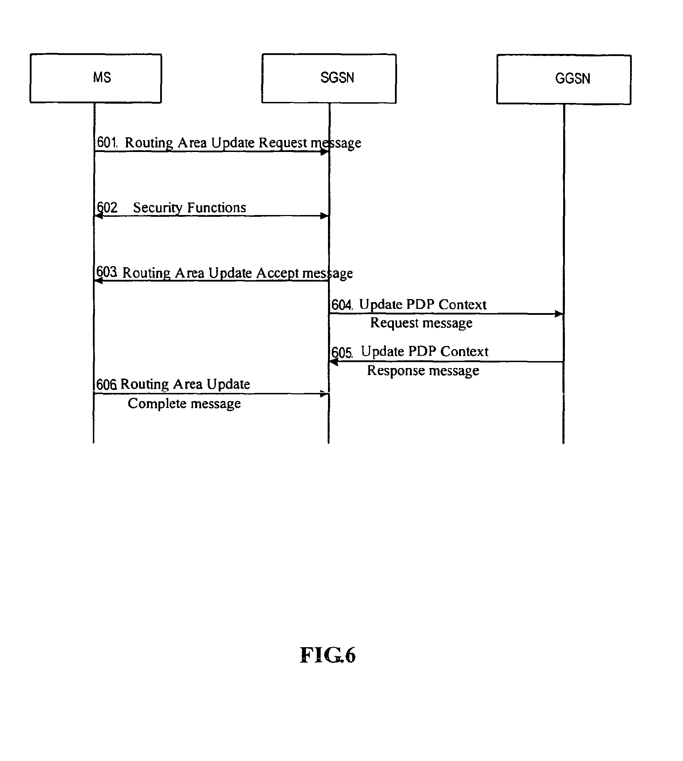

As shown in FIG.6, in the routing area update method in an SGSN according to an embodiment of the present invention, in step 601, an MS sends a Routing Area Update Request message to an SGSN; the Routing Area Update Request message contains information of the previous routing area and the current routing area, temporary ID of the subscriber, and type of routing area update; in step 602, the SGSN performs Security Functions in accordance with the configuration of operator; in step 603, the SGSN issues a Routing Area Update Accept message to the MS, to notify the MS the routing area that update has been accepted by the core network; in step 604, the SGSN sends an Update PDP Context Request message to an GGSN; in step 605, the GGSN returns an Update PDP Context Response message to the SGSN. In step 606, if the core network re-assigned a temporary ID to the subscriber in the Routing Area Update Accept message, the MS responds with a Routing Area Update Complete message, to indicate that the Routing Area Update Accept message from the core network has been received and the re-assigned temporary ID has been accepted.

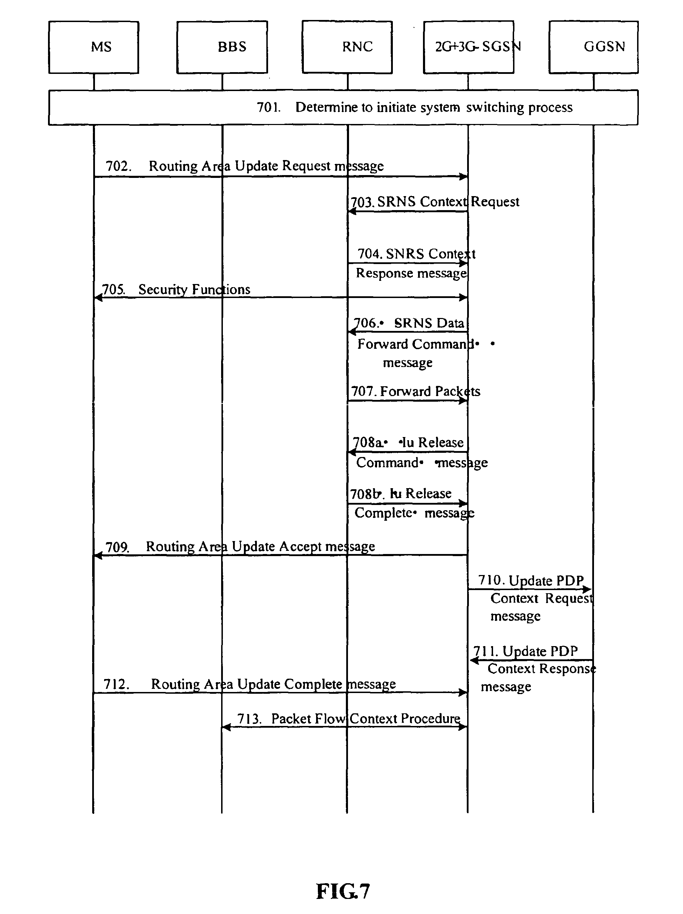

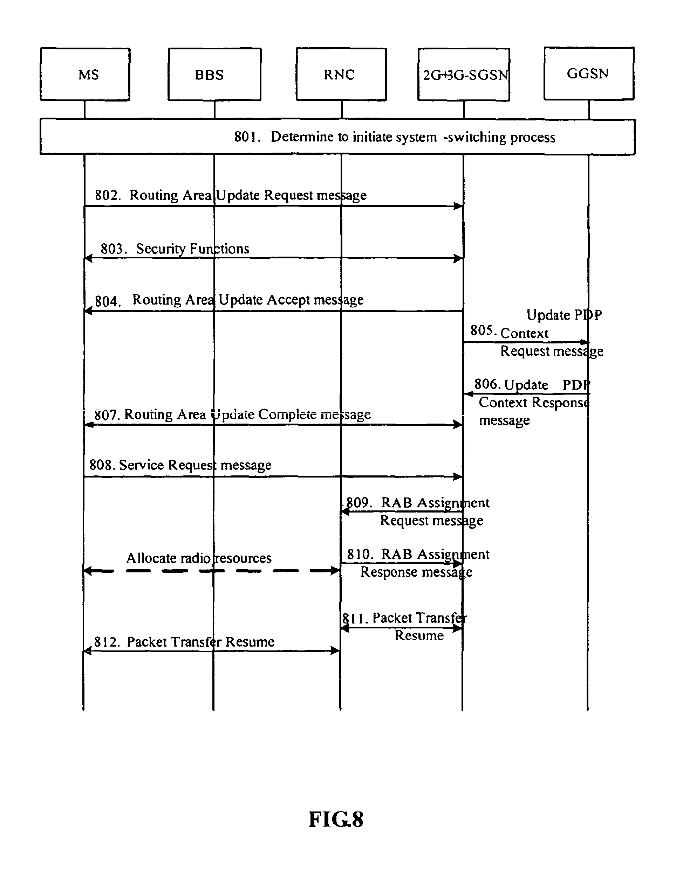

Hereinafter an embodiment of the present invention is further described and explained with reference to FIG. 7 and FIG. 8.

As shown in FIG.7, in the routing area update method in an SGSN according to an embodiment of the present invention, when system switching from UMTS to GSM in an SGSN occurs, in step 701, it is determined to initiate a system switching process.

In step 702, an MS sends a Routing Area Update Request message to an SGSN; the Routing Area Update Request message contains information elements, such as information of the previous routing area and the current routing area, temporary ID of the subscriber, and type of the routing area update, to notify the SGSN to initiate a system switching process.

In step 703, the SGSN sends a Serving Radio Network Subsystem (SRNS) Context Request message to an RNC, to notify the RNC to stop data forwarding and obtain a subscriber's data package's sequence number. It is noted that the RNC here is an RNC in SRNS.

In step 704, the RNC returns an SRNS Context Response message.

In step 705, the SGSN performs Security Functions on the subscriber in accordance with the configuration of operator.

In step 706, the SGSN notifies the RNC to forward buffered packets to the SGSN (with an SRNS Data Forward Command message).

In step 707, the RNC begins to forward the buffered packets (with a Forward Packets message).

In step 708a and 708b, the SGSN notifies the RNC to release an Iu connection (with an Iu Release Command message and an Iu Release Complete message).

In step 709, the SGSN issues a Routing Area Update Accept message to the MS, to notify the mobile subscriber that the routing area update has been accepted by the core network.

In step 710, the SGSN sends an Update PDP Context Request message to the GGSN. The SGSN determines whether the PLMN ID of the new routing area is identical with that of the original routing area; if the two PLMN IDs are not identical with each other, the PDP context in the corresponding GGSN should be updated. Since the subscriber enters from a UMTS routing area to a GSM routing area in this embodiment, the two PLMN IDs are not identical with each other; therefore, the PDP context in the corresponding GGSN has to be updated. The update procedures are consistent with those specified in the corresponding protocol, i.e., the SGSN sends an Update PDP Context Request message to the GGSN, and the GGSN responds when receiving the Update PDP Context Request message. Since the SGSN updates the GGSN through the procedures specified in the prior corresponding protocol, the SGSN in the technical solution of an embodiment of the present invention is fully compatible with GGSNs conforming to the prior technical standards.

In step 711, the GGSN feeds an Update PDP Context Response message back to the SGSN. According to the PDP context update result, the Update PDP Context Response message fed back to the SGSN may indicate success or failure. If receiving an Update PDP Context Response message that indicates success, the SGSN continues the routing area update and system switching process and execute step 712; if receiving an Update PDP Context Response message that indicates failure, the SGSN releases a corresponding PDP context. If the GGSN does not respond for a specified time, the SGSN will resend an Update PDP Context Request message to the GGSN; if the SGSN does not receive any response after sending several successive Request messages, the SGSN will release a corresponding PDP context.

Those skilled in the art shall appreciate that, through the steps 710 and 702, the GGSN can be notified and updated timely when the subscriber moves across routing areas with different PLMN IDs. Therefore, normal operation of GGSN-related services and correctness of GGSN charging data recorder can be ensured.

In step 712, if the core network assigned a temporary ID to the subscriber in the Routing Area Update Accept message, the mobile subscriber respond with a Routing Area Update Complete message, to indicate that the Routing Area Update Accept message from the core network has been received and the re-assigned temporary ID has been accepted.

In step 713, the BSS and SGSN execute a BSS Packet Flow Context Procedure.

As shown in FIG. 8, in the routing area update method in an SGSN according to an embodiment of the present invention, when system switching from GSM to UMTS in the SGSN occurs, in step 801, it is determined to initiate a system switching process. In step 802, an MS sends a Routing Area Update Request message; the message contains information elements, such as information of the previous routing area and the current routing area, temporary ID of the subscriber, and type of the routing area update, to notify the SGSN to initiate a system switching process.

In step 803, the SGSN performs Security Functions on the subscriber in accordance with the configuration of operator.

In step 804, the SGSN issues a Routing Area Update Accept message, to notify the mobile subscriber that the routing area update has been accepted by the core network.

In step 805, the SGSN sends an Update PDP Context Request message to a GGSN. The SGSN determines whether the PLMN ID of the new routing area is identical with that of the original routing area; if the two PLMN IDs are not identical with each other, the SGSN will update the PDP context in the corresponding GGSN. Since the subscriber enters from a UMTS routing area to a GSM routing area in this embodiment, the two PLMN IDs are not identical with each other; therefore, the PDP context in the corresponding GGSN has to be updated. The update procedures are consistent with those specified in the corresponding protocol, i.e., the SGSN sends an Update PDP Context Request message to the GGSN, and the GGSN responds when receiving the Request message. Since the SGSN updates the GGSN through the procedures specified in the corresponding protocol, the SGSN in the technical solution of the present invention is fully compatible with GGSNs conforming to the prior technical standards.

In step 806, the GGSN feeds an Update PDP Context Response message back to the SGSN. According to the PDP context update result, the Response message fed back to the SGSN may indicate success or failure. If receiving a Response that indicates success, the SGSN continues the routing area update and system switching process and execute step 807; if receiving a Response that indicates failure, the SGSN releases the corresponding PDP context. If the GGSN does not respond for a specified time, the SGSN will resend an Update PDP Context Request message to the GGSN; if the SGSN doesn't receive any response after sending several successive Request messages, the SGSN will release the corresponding PDP context.

Therefore, the GGSN can be notified and updated timely when the subscriber moves across routing areas with different PLMN IDs. Thus, normal operation of GGSN-related services and correctness of GGSN charging data recorder can be ensured.

In step 807, if the core network assigned a temporary ID to the subscriber in the Routing Area Update Accept message, the mobile subscriber respond with a Routing Area Update Complete message, to indicate that the Routing Area Update Accept message from the core network has been received and the re-assigned temporary ID has been accepted.

In step 808, the MS sends a Service Request message to the SGSN, to request to reconstruct the resource required for resuming packet transfer.

In step 809, the SGSN issues a RAB Assignment Request message to instruct the RNC to allocate resource.

In step 810, the RNC sends a RAB Assignment Response message to the SGSN to allocate radio resource, and returns the result.

In step 811, the packet transfer between SGSN and the access network is resumed (with a Packet Transfer Resume message).

In step 812, the packet transfer between the MS and the RNC is resumed.

As shown in FIGs. 6, 7, and 8, in the optimized routing area update process and system switching process in an SGSN, if the PLMN ID of the access network serving the subscriber changes, the SGSN will notify the GGSN to update and then continue the normal process. Since the messages used by SGSN in the process of updating the GGSN process are messages conforming to the protocol specifications, and can be initiated at any time, the optimization will not affect interface compatibility.

Though the present invention is described and illustrated with reference to some preferred embodiments of the present invention, those skilled in the art shall appreciate that various modifications to the present invention can be made in form and details without departing from the scope of the present invention as defined in the attached claims.

## Claims

1. A routing area update method, comprising;
when a mobile station enters from a first routing area into a second routing area, providing a serving general packet radio service support node, hereinafter referred to as SGSN, for managing the first and second routing areas, checking whether public lands mobile network IDs of the first and second routing areas are identical with each other;
if the public lands mobile network IDs of the first and second routing areas are not identical with each other, notifying a gateway general packet radio service support node hereinafter referred to as GGSN, of updating a public lands mobile network ID.

2. The routing area update method according to claim 1, wherein the public lands mobile network ID is updated by updating packet data protocol, hereinafter referred to as PDP, context in a corresponding GGSN.

3. The routing area update method according to claim 2, wherein the updating the public lands mobile network ID by updating PDP context in a corresponding GGSN comprises:
sending (604, 710, 805) an Update PDP Context Request from the SGSN to the GGSN, the Update PDP Context Request containing public lands mobile network information of the second routing area;
updating the public lands mobile network ID according to the Update PDP Context Request, and returning (605, 711, 806) an Update PDP Context Response to the SGSN, by the GGSN;
determining whether the Update PDP Context Response indicates success; if the Update PDP Context Response indicates success, continuing the routing area update or system switching process; otherwise releasing corresponding packet data protocol context by the SGSN.

4. The routing area update method according to claim 2 or 3, wherein the first routing area belongs to a universal mobile telecommunications system and the second routing area belongs to a global system for mobile communication, before updating a public lands mobile network ID in a GGSN, further comprises:
sending (702) a Routing Area Update Request from the mobile station to the SGSN, the Routing Area Update Request containing information of the first and second routing areas, temporary ID of the mobile station, and type of the routing area update;
notifying a radio network controller, hereinafter referred to as RNC, to stop data forwarding by sending (703) a Serving Radio Network Subsystem Context Request from the SGSN to the RNC, obtaining a subscriber data package's sequence number;
performing (705) Security Functions on the subscriber by the SGSN;
notifying (706) the RNC to forward buffered data to the SGSN,;
notifying (708a, 708b) the RNC to release Iu connection by the SGSN; and sending (709) a Routing Area Update Accept message from the SGSN to the mobile station.

5. The routing area update method according to claim 4, wherein after updating a public lands mobile network ID in the GGSN, further comprises:
returning (712) a Routing Area Update Complete from the mobile station to the GGSN;
performing (713) a BSS Packet Flow Context Procedure by a base station subsystem and the SGSN.

6. The routing area update method according to claim 2 or 3, wherein the first routing area belongs to a global system for mobile communication system and the second routing area belongs to a universal mobile telecommunications system, before updating a public lands mobile network ID in a GGSN, further comprises;
sending (702) a Routing Area Update Request by the mobile station, the Routing Area Update Request containing information of the first and second routing areas, temporary ID of the subscriber, and type of routing area update;
performing (705) Security Functions on the subscriber by the SGSN, in accordance with the configuration of operator;
sending (709) a Routing Area Update Accept message from the SGSN to the mobile station.

7. The routing area update method according to claim 6, wherein after updating a public lands mobile network ID in the GGSN, further comprises:
sending (808) a Service Request message from the mobile station to the SGSN, to request to reconstruct resource required for resuming packet transfer;
sending (809) a Radio Access Bearer, hereinafter referred to as RAB, Assignment Request from the SGSN to a radio network controller, hereinafter referred to as RNC, to instruct the RNC to allocate resource;
sending (810) a RAB Assignment Response from the RNC to the SGSN to allocate radio resource;
resuming (811) the packet transfer between the SGSN and the RNC;
resuming (812) the packet transfer between the mobile station and the RNC.

8. A serving general packet radio service support node, comprising:
means for managing a first routing area and a second routing area, checking whether public lands mobile network IDs of the first and second routing areas are identical with each other when a mobile station enters from the first routing area into the second routing area; and
means for initiating a notification of updating of a public lands mobile network ID in a gateway general packet radio service support node if the public lands mobile network IDs of the first and second routing areas are not identical with each other.

9. A routing area update system, comprising:
a serving general packet radio service support node, hereinafter referred to as SGSN, and a gateway general packet radio service support node, hereinafter referred to as GGSN,
wherein the SGSN is configured to check whether public lands mobile network IDs of a first routing area and a second routing area are identical with each other when a mobile station enters from the first routing area into the second routing area, and notify the GGSN of updating of a public lands mobile network ID if the public lands mobile network IDs of the first and second routing areas are not identical with each other;
the GGSN is configured to update the public lands mobile network ID thereof.

10. The routing area update system according to claim 9, further comprising:
means for constructing an Update Packet Data Protocol, hereinafter referred to as PDP, Context Request message, which is addressed to the GGSN.

11. The routing area update system according to claim 10, further comprising;
means for constructing an Update PDP Context Response message, which is addressed to the SGSN.

## Patentansprüche

1. Routing-Area-Aktualisierungsverfahren, welches aufweist:
wenn eine mobile Station aus einer ersten Routing-Area in eine zweite Routing-Area eintritt, Vorsehen eines Serving-General-Packet-Radio-Service-Support-Nodes, nachfolgend als SGSN bezeichnet, zum Verwalten der ersten und der zweiten Routing-Area, Prüfen, ob IDs von öffentlichen Mobilfunknetzen der ersten und der zweiten Routing-Area einander identisch sind;
wenn die IDs von öffentlichen Mobilfunknetzen der ersten und der zweiten Routing-Area nicht einander identisch sind, Benachrichtigen eines Gateway-General-Packet-Radio-Service-Support-Nodes, nachfolgend als GGSN bezeichnet, von der Aktualisierung eines ID für ein öffentliches Mobilfunknetz.

2. Routing-Area-Aktualisierungsverfahren nach Anspruch 1, bei dem das ID für ein öffentliches Mobilfunknetz aktualisiert wird durch Aktualisieren eines Paketdatenprotokoll-, nachfolgend als PDP bezeichnet, Kontexts in einem entsprechenden GGSN.

3. Routing-Area-Aktualisierungsverfahren nach Anspruch 2, bei dem das Aktualisieren des ID für ein öffentliches Mobilfunknetz durch Aktualisieren des PDP-Kontexts in einem entsprechenden GGSN aufweist:
Senden (604, 710, 805) einer PDP-Kontext-Aktualisierungsanforderung von dem SGSN zu dem GGSN, welche PDP-Kontext-Aktualisierungsanforderung Informationen über das öffentliche Mobilfunknetz der zweiten Routing-Area enthält;
Aktualisieren des ID für das öffentliche Mobilfunknetz gemäß der PDP-Kontext-Aktualisierungsanforderung und Zurückführen (605, 711, 806) einer PDP-Kontext-Aktualisierungsantwort zu dem SGSN durch den GGSN;
Feststellen, ob die PDP-Kontext-Aktualisierungsantwort einen Erfolg anzeigt; wenn die PDP-Kontext-Aktualisierungsantwort einen Erfolg anzeigt, Fortsetzen der Routing-Area-Aktualisierung oder eines Systemschaltvorgangs; anderenfalls Freigeben des entsprechenden Paketdatenprotokoll-Kontexts durch den SGSN.

4. Routing-Area-Aktualisierungsverfahren nach Anspruch 2 oder 3, bei dem die erste Routing-Area zu einem universellen Mobiltelekommunikationssystem gehört und die zweite Routing-Area zu einem globalen System für mobile Kommunikation gehört, vor der Aktualisierung eines ID für ein öffentliches Mobilfunknetz in einem GGSN, welches weiterhin aufweist:
Senden (702) einer Routing-Area-Aktualisierungsanforderung von der mobilen Station zu dem SGSN, wobei die Routing-Area-Aktualisierungsanforderung Informationen über die erste und die zweite Routing-Area, ein vorübergehendes ID der mobilen Station und den Typ der Routing-Area-Aktualisierung enthält;
Benachrichtigen einer Funknetz-Steuervorrichtung, nachfolgend als RNC bezeichnet, die Datenübermittlung anzuhalten durch Senden (703) einer Serving-Funknetz-Subsystem-Kontextanforderung von dem SGSN zu der RNC, erhaltend eine Teilnehmer-Datenpaket-Sequenznummer;
Durchführen (705) von Sicherheitsfunktionen bei dem Teilnehmer durch den SGSN;
Benachrichtigen (706) der RNC, um gepufferte Daten zu dem SGSN zu übertragen;
Benachrichtigen (708a, 708b) der RNC, um eine Iu-Verbindung durch den SGSN freizugeben, und
Senden (709) einer Routing-Area-Aktualisierungsannahmenachricht von dem SGSN zu der mobilen Station.

5. Routing-Area-Aktualisierungsverfahren nach Anspruch 4, das nach dem Aktualisieren eines ID für ein öffentliches Mobilfunknetz in dem GGSN weiterhin aufweist:
Zurückführen (712) einer Routing-Area-Aktualisierungsbeendigung von der mobilen Station zu dem GGSN;
Durchführen (713) eines BSS-Paketfluss-Kontextvorgangs durch ein Basisstations-Subsystem und den SGSN.

6. Routing-Area-Aktualisierungsverfahren nach Anspruch 2 oder 3, bei dem die erste Routing-Area zu einem globalen System für Mobilkommunikation gehört und die zweite Routing-Area zu einem universellen Mobiltelekommunikationssystem gehört, welches vor der Aktualisierung eines ID für ein öffentliches Mobilfunknetz in einem GGSN weiterhin aufweist:
Senden (702) einer Routing-Area-Aktualisierungsanforderung durch die mobile Station, wobei die Routing-Area-Aktualisierungsanforderung Informationen über die erste und die zweite Routing-Area, ein vorübergehendes ID des Teilnehmers und den Typ der Routing-Area-Aktualisierung enthält; Durchführen (705) von Sicherheitsfunktionen bei dem Teilnehmer durch den SGSN gemäß der Konfiguration des Operators;
Senden (709) einer Routing-Area-Aktualisierungsannahmenachricht von dem SGSN zu der mobilen Station.

7. Routing-Area-Aktualisierungsverfahren nach Anspruch 6, welches nach der Aktualisierung eines ID für ein öffentliches Mobilfunknetz in dem GGSN weiterhin aufweist:
Senden (808) einer Serviceanforderungsnachricht von der mobilen Station zu dem SGSN, um die Rekonstruktion einer Ressource anzufordern, die zur Wiederaufnahme der Paketübertragung erforderlich ist;
Senden (809) einer Funkzugangsträger-(nachfolgend als RAB bezeichnet)Zuteilungsanforderung von dem SGSN zu einer Funknetz-Steuervorrichtung, nachfolgend als RNC bezeichnet, um die RNC anzuweisen, eine Ressource zuzuteilen;
Senden (810) einer RAB-Zuteilungsantwort von der RNC zu dem SGSN, um eine Funkressource zuzuteilen;
Wiederaufnehmen (811) der Paketübertragung zwischen dem SGSN und der RNC;
Wiederaufnehmen (812) der Paketübertragung zwischen der mobilen Station und der RNC.

8. Serving-General-Packet-Radio-Service-Support-Node, welcher aufweist:
Mittel zum Verwalten einer ersten Routing-Area und einer zweiten Routing-Area, Prüfen, ob IDs von öffentlichen Mobilfunknetzen der ersten und der zweiten Routing-Area einander identisch sind, wenn eine mobile Station aus der ersten Routing-Area in die zweite Routing-Area eintritt; und
Mittel zum Initiieren einer Aktualisierungsbenachrichtigung für ein ID eines öffentlichen Mobilfunknetzes in einem Gateway-General-Packet-Radio-Service-Support-Node, wenn die IDS der öffentlichen Mobilfunknetze der ersten und der zweiten Routing-Area nicht einander identisch sind.

9. Routing-Area-Aktualisierungssystem, welches aufweist:
einen Serving-General-Packet-Radio-Service-Support-Node, nachfolgend als SGSN bezeichnet, und einen Gateway-General-Packet-Radio-Service-Support-Node, nachfolgend als GGSN bezeichnet, worin der SGSN ausgebildet ist zum Prüfen, ob IDs von öffentlichen Mobilfunknetzen einer ersten Routing-Area und einer zweiten Routing-Area einander identisch sind, wenn eine mobile Station aus der ersten Routing-Area in die zweite Routing-Area eintritt, und Benachrichtigen des GGSN von der Aktualisierung eines ID für ein öffentliches Mobilfunknetz, wenn die IDs der öffentlichen Mobilfunknetze der ersten und der zweiten Routing-Area nicht einander identisch sind;
der GGSN ausgebildet ist zum Aktualisieren des ID für das öffentliche Mobilfunknetz hiervon.

10. Routing-Area-Aktualisierungssystem nach Anspruch 9, welches weiterhin aufweist:
Mittel zum Konstruieren einer Aktualisierungs-Paketdatenprotokoll-, nachfolgend als PDP bezeichnet, Kontextanforderungsnachricht, die an den GGSN adressiert ist.

11. Routing-Area-Aktualisierungssystem nach Anspruch 10, welches weiterhin aufweist:
Mittel zum Konstruieren einer Aktualisierungs-PDP-Kontextantwortnachricht, die an den SGSN adressiert ist.

## Revendications

1. Procédé de mise à jour de zone de routage, comprenant les étapes consistant à ;
quand une station mobile pénètre dans une deuxième zone de routage en provenance d'une première zone de routage, fournir un noeud de support de service radio de paquet général de desserte, désigné ci-après sous le nom de SGSN, destiné à gérer les première et deuxième zones de routage, en vérifiant si les ID du réseau mobile terrestre public des première et deuxième zones de routage sont identiques les uns avec les autres ;
si les ID du réseau mobile terrestre public des première et deuxième zones de routage ne sont pas identiques les uns avec les autres, informer un noeud de support de service radio de paquet général de passerelle, désigné ci-après sous le nom de GGSN, de mettre à jour un ID du réseau mobile terrestre public.

2. Procédé de mise à jour de zone de routage selon la revendication 1, dans lequel l' ID du réseau mobile terrestre public est mis à jour en mettant à jour un contexte de protocole de données de paquet, désigné ci-après sous le nom de PDP, dans un GGSN correspondant.

3. Procédé de mise à jour de zone de routage selon la revendication 2, dans lequel la mise à jour de l'ID du réseau mobile terrestre public en mettant à jour un contexte PDP dans un GGSN correspondant, comprend les étapes consistant à :
envoyer (604, 710, 805) une demande de contexte PDP de mise à jour à partir du SGSN vers le GGSN, la demande de contexte PDP de mise à jour contenant des informations de la deuxième zone de routage du réseau mobile terrestre public ;
mettre à jour l'ID du réseau mobile terrestre public selon la demande de contexte PDP de mise à jour, et faire retourner (605, 711, 806), par le GGSN, une réponse de contexte PDP de mise à jour au SGSN ;
déterminer si la réponse de contexte PDP de mise à jour indique une réussite ; si la réponse de contexte PDP de mise à jour indique une réussite, continuer le procédé de mise à jour de zone de routage ou de commutation du système ; sinon faire libérer par le SGSN le contexte de protocole de données de paquet correspondant.

4. Procédé de mise à jour de zone de routage selon la revendication 2 ou la revendication 3, dans lequel la première zone de routage appartient à un système UMTS et la deuxième zone de routage appartient à un système GSM, avant de mettre à jour un ID du réseau mobile terrestre public dans un GGSN, le procédé comprend en outre les étapes consistant à :
envoyer (702) une demande de mise à jour de zone de routage à partir de la station mobile vers le SGSN, la demande de mise à jour de zone de routage contenant des informations qui concernent les première et deuxième zones de routage, l'ID provisoire de la station mobile, et le type de mise à jour de zone de routage ;
informer un contrôleur de réseau radio, désigné ci-après sous le nom de RNC, de cesser de transmettre des données en envoyant (703) une demande de contexte de sous-système de réseau de radio de desserte à partir du SGSN vers le RNC, en obtenant un numéro de séquence d'un paquet de données d'abonné ;
faire exécuter (705) par le SGSN, des fonctions de sécurité sur l'abonné ;
informer (706) le RNC de transmettre les données tamponnées au SGSN ;
informer (708a, 708b) le RNC de faire libérer la connexion par le SGSN ; et
envoyer (709) un message d'acceptation de mise à jour de zone de routage à partir du SGSN vers la station mobile.

5. Procédé de mise à jour de zone de routage selon la revendication 4, dans lequel après une mise à jour d'un ID du réseau mobile terrestre public dans le GGSN, le procédé comprend en outre les étapes consistant à :
retourner (712) un achèvement de mise à jour de zone de routage à partir de la station mobile vers le GGSN ;
faire exécuter (713) un procédé de contexte de flux de paquet BSS par un sous-système de station de base et le SGSN.

6. Procédé de mise à jour de zone de routage selon la revendication 2 ou la revendication 3, dans lequel la première zone de routage appartient à un système GSM et la deuxième zone de routage appartient à un système UMTS, avant de mettre à jour un ID du réseau mobile terrestre public dans un GGSN, le procédé comprend en outre les étapes consistant à ;
faire envoyer (702) une demande de mise à jour de zone de routage par la station mobile, la demande de mise à jour de zone de routage contenant des informations qui concernent les première et deuxième zones de routage, l'ID provisoire de l'abonné, et le type de mise à jour de zone de routage ;
faire exécuter par le SGSN (705) des fonctions de sécurité sur l'abonné, selon la configuration de l'opérateur ;
envoyer (709) un message d'acceptation de mise à jour de zone de routage à partir du SGSN vers la station mobile.

7. Procédé de mise à jour de zone de routage selon la revendication 6, dans lequel après une mise à jour d'un ID du réseau mobile terrestre public dans le GGSN, le procédé comprend en outre les étapes consistant à :
envoyer (808) un message de demande de service à partir de la station mobile vers le SGSN, de manière à demander de reconstruire une ressource requise afin de reprendre le transfert de paquet ;
envoyer (809) une demande d'attribution de porteuse d'accès radio, désignée ci-après sous le nom de RAB, à partir du SGSN vers un contrôleur de réseau radio, désigné ci-après sous le nom de RNC, de manière à demander au RNC d'attribuer une ressource ;
envoyer (810) une réponse d'affectation de RAB à partir du RNC vers le SGSN de manière à attribuer la ressource radio ;
reprendre (811) le transfert de paquet entre le SGSN et le RNC ;
reprendre (812) le transfert de paquet entre la station mobile et le RNC.

8. Noeud de support de service radio de paquet général de desserte, comprenant :
des moyens destinés à gérer une première zone de routage et une deuxième zone de routage, à vérifier si les ID du réseau mobile terrestre public des première et deuxième zones de routage sont identiques les uns avec les autres, quand une station mobile pénètre dans une deuxième zone de routage en provenance d'une première zone de routage ; et
des moyens destinés à lancer une notification de mise à jour d'un ID du réseau mobile terrestre public dans un noeud de support de service radio paquet général de passerelle si les ID du réseau mobile terrestre public des première et deuxième zones de routage ne sont pas identiques les uns avec les autres.

9. Système de mise à jour de zone de routage, comprenant :
un noeud de support de service radio de paquet général de desserte, désigné ci-après sous le nom de SGSN, et un noeud de support de service radio de paquet général de passerelle, désigné ci-après sous le nom de GGSN,
dans lequel le SGSN est configuré de manière à vérifier si les ID du réseau mobile terrestre public d'une première zone de routage et d'une deuxième zone de routage sont identiques les uns avec les autres quand une station mobile pénètre dans la deuxième zone de routage à partir de la première zone de routage, et informer le GGSN d'une mise à jour d'un ID du réseau mobile terrestre public si les ID du réseau mobile terrestre public des première et deuxième zones de routage ne sont pas identiques les uns avec les autres ;
le GGSN est configuré de manière à mettre à jour l'ID du réseau mobile terrestre public de celui-ci.

10. Système de mise à jour de zone de routage selon la revendication 9, comprenant en outre :
des moyens de construire un message de demande de contexte de protocole de données de paquet de mise à jour, désigné ci-après sous le nom de PDP, qui est adressé au GGSN.

11. Système de mise à jour de zone de routage selon la revendication 10, comprenant en outre :
des moyens de construire un message de réponse de contexte PDP de mise à jour, qui est adressé au SGSN.
